# EUROPEAN PATENT SPECIFICATION

(11) **EP 3 263 221 B1**
(45) Date of publication and mention of the grant of the patent: **06.03.2019**
(21) Application number: 17177670.1
(22) Date of filing: 23.06.2017
(51) Int. Cl.: B03C 1/28, F24D 19/00, B01D 21/00, B01D 21/24

(54) **DIRT MAGNETIC SEPARATOR FOR THERMAL PLANTS**
SCHMUTZ-MAGNETSCHEIDER FÜR WÄRMEKRAFTWERKE
SÉPARATEUR MAGNÉTIQUE DE SALETÉ DESTINÉ À DES INSTALLATIONS THERMIQUES

(30) Priority: 28.06.2016 IT UA20164716
(43) Date of publication of application: 03.01.2018
(73) Proprietor: Far Rubinetterie S.P.A., 28024 Gozzano (NO) (IT)
(72) Inventor: ALLESINA, Guerrino, 28024 Gozzano (IT)
(74) Representative: Candito, Rocco

(56) References cited:
- EP-A1- 2 614 893
- EP-A1- 2 829 811
- US-A1- 2014 367 340

## Description

The present invention relates to a dirt magnetic separator, suitable for being used in a thermal plant, i.e. in a heating and/or cooling plant in order to separate ferrous and non-ferrous particles from a thermal fluid circulating in the aforesaid plant.

Dirt separators, of magnetic type, are known that are installed in domestic thermal plants to remove from the circulating fluid the inevitable particles conveyed by the circulating fluid, and which are due to dirt present in the plants and to corrosion, with consequent detachment of rust from the pipes, radiators or other components. Using these separators is thus important to prevent the dirt particles accumulating in the delicate parts of the plant, causing problems.

In particular, it is extremely important to provide a magnetic separator upstream of an apparatus to be preserved from dirt, like a domestic boiler. In this case, it is desirable to limit to the maximum the overall dimensions of the magnetic separator and ensure maximum fitting and also operating versatility of the separator.

A first type of known separator comprises a container, provided with an inlet and an outlet for the circulating fluid in the heating plant, and bounding internally a separating chamber inside which a magnetic bar extends longitudinally to retain only the ferrous particles. There is thus no retaining action also for non-ferrous particles. The magnetic bar, during operation, is thus immersed in and in contact with the fluid, and is fixed to the container in a removable manner. The magnetic bar extends along almost the entire separating chamber so as to be positioned in the middle of the zone traversed by the fluid so as to be thus more subject to the fluid-dynamic actions of turbulence and dragging of the fluid.

The magnetic bar, fixed to a removable cover screwed to the container, is extracted periodically to remove the ferrous particles retained thereby magnetically.

Unfortunately, in order to remove the ferrous particles adhering to the magnetic bar, it is necessary to extract the latter by unscrewing the cover and thus opening the container. Accordingly, before performing the operations of removing the ferrous particles, it is necessary to interrupt the circulation of the thermal fluid that traverses the separator, and this makes it necessary to fit upstream and downstream of the latter suitable check valves for the fluid. Further, as said above, the aforesaid separator is not able to retain non-ferrous particles.

Another magnetic separator, with similar drawbacks, is disclosed in US4585553. This known separator comprises a container with a cylindrical casing in the vertical wall of which magnets are provided. The enclosure, containing the magnets, can be removed from the wall to enable the ferromagnetic detritus to fall onto the bottom of the apparatus, to be evacuated by a lower tap. The fluid enters through a horizontal inlet connection, advances downwards sliding along the surfaces that bound the magnets, thus very near the magnets, then rises again centrally upwards and flows out along a horizontal outlet connection aligned on the inlet connection. As the fluid advances very near the magnets, it is unfortunately necessary to arrest the circulation of the fluid before removing the magnets and thus be able to evacuate the detritus. Otherwise, the advancement of the fluid near the collecting zone would drag with it the previously retained particles. The aligned arrangement of the outlet connection with the diametrically opposite inlet connection further involves unsatisfactory overall dimensions in a transverse direction. Further, if it is desired to interpose the separator between the vertical conduit protruding from the bottom of a boiler and the delivery conduit protruding from a wall, fitting difficulties would remain unless further elbow connection elements were fitted, which would however further aggravate the overall dimensions.

Another magnetic separator is disclosed in WO83/03207 that describes a device for removing ferromagnetic particles from a liquid. This device provides magnets housed on a lower cup element that can be removed to enable the detritus to be evacuated. Also in the separator of WO83/03207 the path that is set for the fluid has a vertical downward portion and a subsequent coaxial vertical upward portion. Also in this case the fluid is advanced into the bottom zone near the magnets. In this manner, in order to proceed with evacuating the particles, unfortunately, it is necessary to stop the thermal circuit, unscrew the lower cup and remove a closing pin that is screwed into the discharge opening. For this reason the separator, in addition to having unsatisfactory operation, is also inconvenient in particle-evacuation operations.

DE19833293C1 discloses another separator comprising a cylindrical container made of non-ferromagnetic material, on which are provided an inlet for the fluid, placed tangentially on an upper zone of the wall of the container, and an outlet located in a position adjacent to the inlet, but in a zone lower than the inlet. In particular, the inlet and the outlet are located in the same region with respect to a diameter plane passing through the longitudinal axis of the container. The inlet and outlet are thus positioned on the same side with respect to the aforesaid diameter plane, but the outlet is obtained at a lower height than the inlet. The device is thus configured so that the fluid entering the container flows according to a helical path from top to bottom. The fluid thus tends to flow along the most peripheral zones of the container, adopting a cycloidal shape. The ferromagnetic particles present in the fluid, owing to the centrifugal action, tend to reach the peripheral zones of the cavity of the container, thus touching the wall of the latter. The device is provided with an electromagnet fitted externally in a lateral position on the wall at a height interposed between the inlet and the outlet. The electromagnet is provided with a coil that, when traversed by an electric current, generates a magnetic field in order to attract to itself ferromagnetic particles conveyed by the fluid. The operating principle of this device is thus based on the cyclonic advancement of the fluid that tends to separate the magnetic particles from the fluid by centrifugal action enabling subsequent attraction thereof to the side wall near the electromagnet.

The progressive accumulation of ferromagnetic particles in the electromagnetic attraction zone generates an agglomerated slosh of constantly increasing dimensions and weight. Periodically, the electromagnet is deactivated to stop the magnetic field, so that the agglomeration of magnetic particles, no longer retained on the wall by the electromagnetic attraction force, is free to descend by gravity to the bottom of the container to be evacuated through a suitable discharge opening.

The cyclonic operating principle of the aforesaid device implies that the fluid has to enter tangentially into the container to be able to advance in cyclone mode. This requires the container to have width dimensions that are significantly greater than the inlet and outlet sections for the fluid and this disadvantageously entails clear overall dimensions that are not always compatible with the fitting needs in heating circuits. It is for this reason that the device disclosed in DE19833293C1 is hardly suitable for being fitted along a conduit traversed by the main flow of the fluid of a heating circuit. Further, as the separating and attracting action of the magnetic particles takes place in a zone, interposed between the inlet and the outlet, i.e. directly on the main path of the fluid, a reduction of the fluid in the container is required to prevent the fluid dynamic action of the fluid dragging with it the particles, tearing the particles away from the magnetic field, and this entails a disadvantageous reduction of the flowrate of the circulating fluid. In addition, the evacuation of the ferromagnetic particles can occur by interrupting the electromagnetic field and only once the particles have formed a considerable agglomeration particles. On the contrary, it would be necessary to stop the circuit, otherwise, once the electromagnetic field had been removed, the current of the fluid would drag with it the particles that were no longer retained by the magnetic force.

In order to overcome the drawbacks and limits discussed above, this owner has proposed a magnetic separator, the object of EP2614893, which comprises a separating chamber for the ferrous and non-ferrous particles, a quieting and collecting chamber placed below and magnets removably embedded in the bottom wall of the body of the separator. The separator comprises an inlet and an outlet that extend orthogonally to the longitudinal axis, i.e. both extend horizontally, and on sides that are diametrically opposite the aforesaid longitudinal axis. The inlet and the outlet, placed on side zones of the separating chamber that are diametrically opposite one another, force the fluid to traverse the cartridge contained in the separating chamber.

Although this magnetic separator proves to be highly effective in the action of filtering and separating the particles, and is a general improvement on the aforesaid separators, there is still room for further improvement. In particular, in the specific fitting configurations between the lower vertical conduit of a boiler, and a horizontal conduit protruding from a wall, this magnetic separator requires the use of additional elbow connection elements to the detriment of the overall dimensions. Further, it should be noted that in all the separators with inlet and outlet protruding horizontally and laterally from the separating chamber, an accumulation of air bubbles occurs that tend to rise and gather in the highest internal zone of the separating chambers, and accordingly it is necessary to provide a cover above that is periodically unscrewable or an air-bleeding valve, this complicating the system.

One object of this invention is to improve known dirt magnetic separators and to supply a dirt magnetic separator that is able to overcome the drawbacks mentioned above.

Another object is to provide a very compact dirt magnetic separator, with great versatility in terms of both fitting and operation, and also provided with great efficacy in the action of separating the particles.

In particular, one object is to provide a compact magnetic separator that is particularly suitable for being fitted upstream of a domestic boiler.

The above is made possible by a dirt magnetic separator according to what has been defined in claim 1.

Owing to the dirt magnetic separator according to the invention, all the drawbacks that are inherent in the known devices disclosed above are overcome.

In particular, a separator is obtained that is very compact but is at the same time able to filter and retain effectively the particles, which is easily installable and provided with great operational versatility.

The features and advantages of this invention will be clear from the following description and from the attached drawings, which illustrate some embodiments thereof by way of non-limiting example, in which:
Figure 1 is a longitudinal section view of the dirt magnetic separator according to the invention, in which magnet means is visible in a condition in which it is coupled with the seat means, and, with a dashed line, in a condition of being uncoupled from the seat means;
Figure 2 is a perspective view of the dirt magnetic separator according to the invention;
Figure 3 is a side view of the dirt magnetic separator of Figures 1 and 2.
Figure 4 is a bottom view of the dirt magnetic separator in Figure 3;
Figure 5 is a top view of the dirt magnetic separator in Figure 3;
Figure 6 is a side view of another embodiment of a dirt magnetic separator according to the invention;
Figure 7 is a bottom view of the dirt magnetic separator in Figure 6;
Figure 8 is a top view of the dirt magnetic separator in Figure 6;
Figure 9 is a perspective and longitudinal section view of the dirt magnetic separator in Figure 6.

With reference to the attached Figures, a dirt magnetic separator 1 is shown that is suitable for being installed in circuits traversed by a fluid, in particular in a thermal plant, such as a heating and/or cooling plant of domestic or industrial type.

The dirt magnetic separator 1 comprises a first hollow body 2 defining internally a separating chamber 5 for a circulating fluid in the thermal plant. The first hollow body 2 extends along a longitudinal axis X and is bounded laterally by a side wall 3, that extends around a longitudinal axis X and, above, by an outlet end wall 4, which is transverse to the aforesaid longitudinal axis X.

In particular, the side wall 3, which extends around the longitudinal axis X, is cylindrical. Inside the separating chamber 5 a filtering cartridge 6 is housed that is arranged for obstructing and separating the ferrous particles 7a and the non-ferrous particles 7b from the fluid and for causing the decantation of the particles 7a, 7b downwards. In particular, the filtering cartridge 6 comprises elongated, bar-shaped, elements 31, which are spaced apart from one another and are parallel to the longitudinal axis X.

The elongated elements 31 are provided with peripheral surfaces that are suitable for repeatedly diverting the flow of the fluid to cause the decantation of the ferrous and non-ferrous particles 7a, 7b and the depositing to a lower zone of the separator 1.

The ferrous particles 7a and non-ferrous particles 7b which, dragged by the fluid, reach the separating chamber 5 by entering through the inlet connection 12, are obstructed by the filtering cartridge 6. In this manner, whilst only the fluid is free to leave the separating chamber 5, the dirt particles, owing to the obstructing action of the filtering cartridge 6, are forced to be deposited on the bottom of the separator 1 to be periodically evacuated.

The magnetic separator 1 comprises a second hollow body 8, defining internally a quieting and collecting chamber 9 suitable for receiving and storing the aforesaid ferrous particles 7a and non-ferrous particles 7b. The quieting and collecting chamber 9 is bounded below by a bottom wall 10 and laterally by a bounding wall 21.

On the bottom wall 10 an inner collecting surface 11 is obtained that is arranged for receiving and storing the ferrous and non-ferrous particles 7a that, obstructed by said filtering cartridge 6, precipitate downwards through the effect of gravity and the effect of magnetic attraction in the case of ferromagnetic particles, owing to magnet means 15 that is removably recessed in the bottom wall 10, and disclosed better below.

On the bottom wall 10 a discharge opening 20 is obtained for the periodical evacuation of the ferrous and non-ferrous particles 7a, 7b. A tap 27 is provided that is drivable to enable the particles 7a, 7b to be evacuated periodically. Alternatively to the tap 27 a closing cap is provided that is removable for the periodical evacuation of the impurities.

The magnetic separator 1 comprises an inlet connection 12 for the fluid, extending along an axis S that is transverse to the longitudinal axis X.

The inlet connection 12 is obtained on the side wall 3 near an upper zone 13 that is further from the quieting and collecting chamber 9, such that the advancement and turbulent movement and dragging action of the main flow F of the fluid affect substantially an upper portion 5' of the separating chamber 5, far from the quieting and collecting chamber 9.

The magnetic separator 1 comprises an outlet connection 14 for the fluid, obtained on the upper transverse end wall 4, and projecting along an axis Y, which is parallel to the longitudinal axis X.

The outlet connection 14 and the inlet connection 12 extend along directions that are reciprocally orthogonal to one another. The configuration of reciprocal orthogonality of the outlet connection 14 and of the inlet connection 12 is particularly useful and advantageous in determined circuit zones of the thermal plant in which it is necessary to install the magnetic separator 1 in a position interposed between conduits that are non-aligned but are placed transversely to one another. In particular, the advantage is clear that is obtained when it is necessary to a connect a conduit protruding horizontally from one wall to a further conduit that projects vertically from the bottom of a domestic boiler.

The inlet connection 12 and outlet connection 14, in particular, comprise threaded portions for connecting to respective conveying portions of the thermal plant.

The first 2 hollow body and second 8 hollow body are in particular of substantially cylindrical shape and are connected to one another by a threaded coupling with interposed seal washer.

The first 2 hollow body and second 8 hollow body are configured so that, in the coupled condition, the quieting and collecting chamber 9 is arranged below the separating chamber 5. The geometrical configuration of the first 2 and second 8 hollow body is such that the inner collecting surface 11 is at a distance Dx from the inlet connection 12 that is such as not to be affected by turbulence and dragging actions of the fluid, in substance is sufficiently far from the main flow F of the fluid.

In other words, the geometrical configuration of the hollow bodies 2 and 8 is such that the flow F of the advancing fluid and the turbulent movement thereof substantially affect the upper portion of the separating chamber 5, sufficiently far from the quieting and collecting chamber 9. Owing to the significant reduction of turbulence and speed of the fluid near the quieting and collecting chamber 9, the decantation of the ferrous particles 7a and non-ferrous particles 7b and accumulation thereof on the underlying collecting surface 11 are in this manner promoted.

The magnetic separator 2 comprises magnet means 15 engaging removably in seat means 16 obtained in the bottom wall 10 for attracting and retaining the ferrous particles 7a conveyed by the fluid.

The magnet means 15 is arranged in a position outside and below the quieting and collecting chamber 9 to attract the ferrous particles 7a to the inner collecting surface 11 in a zone further from the inlet connection 12, far from turbulence and dragging actions of the flow F of said fluid.

The seat means in particular comprises a blind cavity 16 that is open below to be able to house the magnet means 15 in a releasable manner; the blind cavity 16 extends in a direction that is parallel to the longitudinal axis X to the inside of said quieting and collecting chamber 9.

The blind cavity 16 extends inside the second hollow body 8 such that the magnet 15, when it is housed in the blind cavity 16, is as near as possible to the inner collecting surface 11.

The magnetic attraction exerted by the magnet 15 promotes the fall and accumulation of the ferrous particles on the collecting surface 11 retaining the ferrous particles firmly on the latter. The retaining action exerted by the magnet units 15 is such as to prevent the ferrous particles from being dragged by the fluid that flows into the separating chamber 5.

The magnet means 15 in particular comprises a cylindrical element 23 in which a permanent magnet 24 is contained and fixed.

The cylindrical element 23 is provided with a threaded portion 25 that is suitable for engaging removably with a further threaded portion 26 of the blind cavity 16, and with a gripping portion 28 to permit the operation of screwing into and unscrewing from the blind cavity 16.

Inside the first hollow body 2 a guide bulkhead 17 is obtained that extends in a direction that is transverse to the longitudinal axis X. The guide bulkhead 17 projects from a zone Z1 near the inlet connection 12 and extends to the side diametrically opposite that of the inlet connection 12, so as to bound above a good part of the filtering cartridge 6.

As will be clear from the following description, owing to the guide bulkhead 17 a correct filtering action is ensured whilst at the same time the transverse overall dimensions of the separator are reduced.

The guide bulkhead 17 extends transversely, completely inside the hollow body 2, so as to close from above a substantial part of the separating chamber 5, leaving a passage opening 19 defined which is diametrically opposite the inlet connection 12, which is shaped to enable the fluid to pass from the separating chamber 5 to the outlet from the separator 1.

The guide bulkhead 17 forces the fluid to traverse the cartridge 6 to be subjected to the filtering action, i.e. to cause impacts on the particles that force the particles to slow and precipitate.

The guide bulkhead 17 extends parallel to the end wall 4.

The guide bulkhead 17 is spaced away from the outlet end wall 4 to define a gap 18 for evacuating the fluid to the outlet connection 14. The passage opening 19, which is obtained between an edge 29 of the guide bulkhead 17 and the side wall 3, enables the fluid to pass from the separating chamber 5 to the aforesaid evacuating gap 18 and then to the outlet connection 14.

The passage opening 19 is obtained in a manner that is axially offset with respect to the outlet connection 14, on an opposite side to the inlet connection 12. In other words, a middle axis W passing centrally through the passage opening 19 is offset by an eccentricity distance D_{w} with respect to the longitudinal axis X.

The guide bulkhead 17 and the passage opening 19 that are thus configured have the effect of forcing the fluid coming from the inlet connection 12 to transverse substantially the entire transverse extent T of the filtering cartridge 6 (to receive the slowing and obstructing action on the particles), and have the effect of imposing on the flow F of the fluid a reversal of direction in the advancement from the separating chamber 5 to the outlet connection 14 through the gap 18. In particular, the guide bulkhead 17 and the passage opening 19 are shaped and positioned to impose on the flow of the fluid an upward turn with subsequent advancement, along the gap 18, substantially horizontally in a direction opposite the direction of delivery into the inlet connection 12. The fluid, when it has come near the passage opening 19, is opposite a portion Z2 of side wall 3 diametrically opposite the inlet connection 12, and is forced to bend sharply upwards to traverse the passage opening 19 and flow to the outlet connection 14.

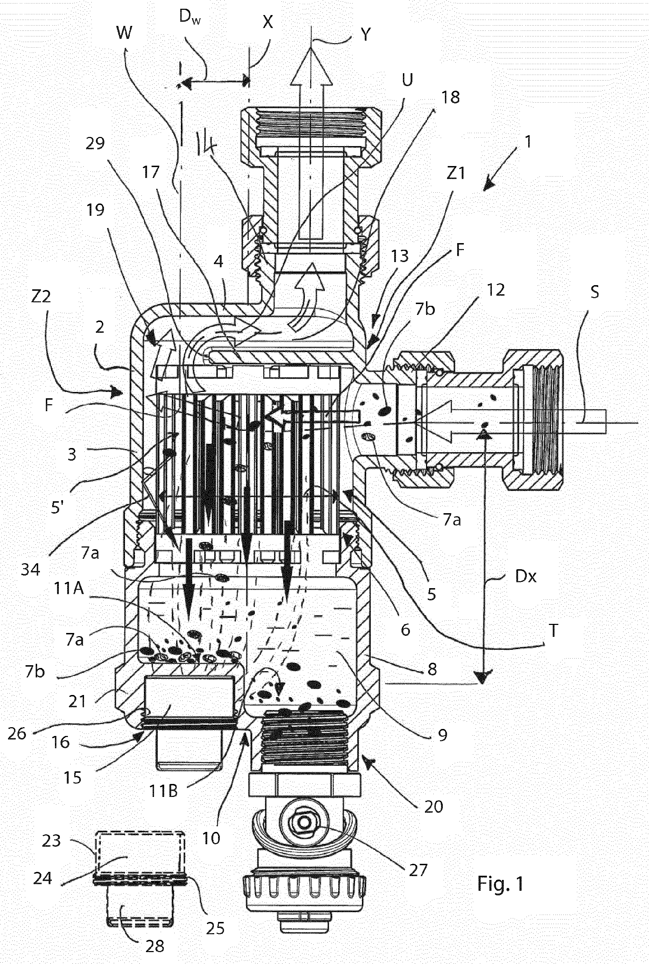

Most of the particles 7 are not even able to reach near the passage opening 19 because of the obstructing action imposed by the filtering cartridge 6 and subsequent precipitation downwards through the effect of the gravity and also, in the case of ferromagnetic dirt, through the effect of the magnetic attraction of the magnet 15. Anyway, a possible collision, indicated by the arrow 34 in Figure 1, against the side wall 3, contrasting with the dragging action of the fluid, stops the advancement of the particles and forces the particles to precipitate through the effect of gravity and the additional action of the force of magnetic attraction in the case of ferrous particles 7a.

Substantially, in the magnetic separator 1 that is thus configured there are several actions that act positively on the separation of the particles:
- the filtering action performed by the filtering cartridge 6 that has the effect of obstructing and slowing the particles conveyed by the fluid,
- a guiding and constricting action performed by the guide bulkhead 17 that has the effect of making the fluid traverse the entire transverse extent T (i.e. width extent) of the filtering cartridge 6 to exploit fully the retaining action of the cartridge 6,
- the action of diverting onto the fluid, in particular the sharp upward turn arising from the particular geometry and position of the passage opening 19, that opposes itself to the dragging action that the fluid exerts on the particles;
- the action of magnetic attraction of the magnet means 15 on the ferrous particles 7a.

The synergic combination of these effects makes separating and depositing the particles in the quieting and collecting chamber 9 extremely effective.

It should also be noted that owing to the presence of the guide bulkhead 17 that extends inside the hollow body 2 the outlet connection 14 and inlet connection 12 can be positioned near to one another without affecting the correct operation of the near separator 1: in fact, the guide bulkhead 17 prevents a direct passage of the fluid from the inlet connection 12 to the outlet connection 14, instead forcing the fluid to traverse the entire cartridge 6. This structural configuration makes possible an advantageous general reduction of the overall dimensions of the magnetic separator 1, ensuring at the same time very great efficacy in the action of separating and filtering the dirt. Such advantages are particularly appreciated and requested for example in the context of domestic thermal plants, in particular in the case of circuits connected to boilers, in which, in addition to advantageously arranging the orthogonality between the inlet connection 12 and outlet connection 14 of the separator 1, in terms of the overall dimensions, it is also advantageous to have available compact dimensions of the separator 1.

Another advantage associated with the disclosed orthogonal arrangement between inlet connection 12 and outlet connection 14 is due to the fact that air bubbles are prevented from accumulating in the separator 1, the air bubbles are first dragged through the gap 18 and then upwards through the outlet connection 14. It is thus not necessary to provide on the separator 1 a removable cap or a bleed valve for the air or the gases present that are trapped in the fluid circulating in the thermal plant.

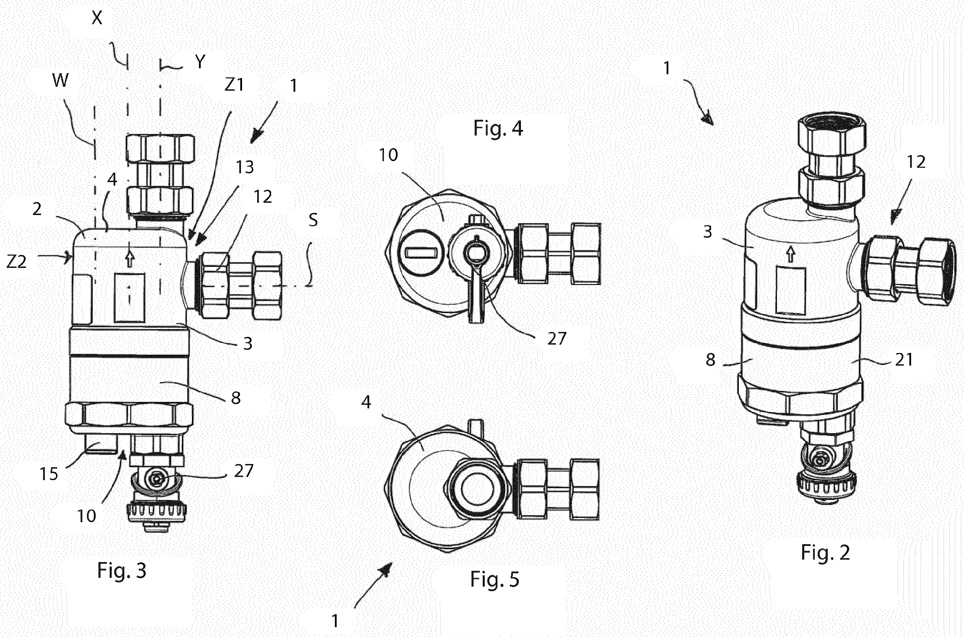

In the magnetic separator 1 shown in Figures 1 to 5, the outlet connection 14 extends along an outlet axis Y that is offset with respect to the longitudinal axis X. The outlet connection 14 projects from a zone of the end wall 4 that is further from the passage opening 19 and nearer the inlet connection 12. This configuration forces the fluid to follow a U-shaped outlet path that is longer in the gap 18 to reach the outlet connection 14, with positive fluid-dynamic effects on general operation and on the action of separating the particles, as is shown by experimental tests.

The blind cavity 16 that houses the magnet 15 extends in a direction that is decentralised with respect to the longitudinal axis X and is positioned in particular on the same side of the passage opening 19 with respect to the longitudinal axis X. In other words, the magnet 15 is approximately axially aligned on the passage opening 19. The blind cavity 16 is thus obtained on a zone of the bottom wall 10 which is diametrically opposite the inlet connection 12, thus below a fraction of volume - of the separating chamber 5 - in which the possible ferrous particles 7a have already undergone a substantial deceleration and are thus more easily capturable by the action of the field of magnetic attraction. Owing to this configuration, and to the fact that the force of the field of magnetic attraction in the volume comprised between the blind cavity 16 and the passage opening 19 has great intensity, possible ferrous particles 7a that have possibly escaped from the slowing and precipitation action induced by the cartridge 6 are successfully prevented from flowing through the passage opening 19, but on the other hand it is ensured that possible ferrous particles 7a are captured vigorously by the attractive magnetic action.

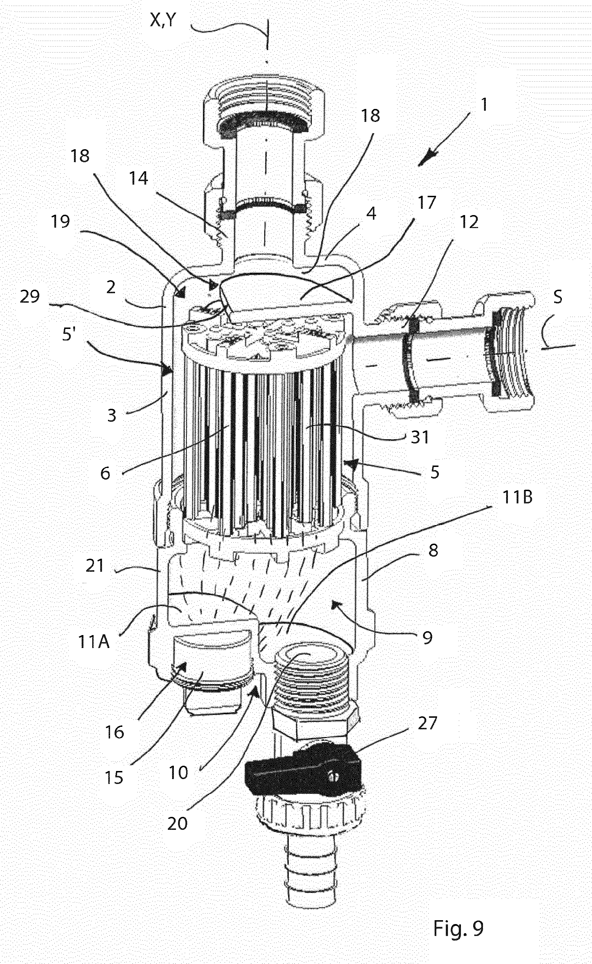

As is visible from the figures, in particular figures 1 and 9, the inner collecting surface 11 comprises a first surface 11A transverse to the longitudinal axis X - under which the blind cavity 16 is obtained that houses the removable magnet 15, and a second transverse surface 11B that is placed at a distance from the separating chamber 5 greater than the first surface 11A, and at which there is the discharge opening 20 for evacuating the particles 7a, 7b. The blind cavity 16 is bounded above by the aforesaid first transverse surface 11A and is partially laterally bounded by the lateral bounding wall 21 of the second hollow body 8 and partially by a cylindrical surface 22 that extends parallel to the longitudinal axis X and connects the first collecting surface 11A to the second collecting surface 11B. Owing to this geometrical configuration, when the magnet 15, is received in the seat 16 (blind cavity 16), it is as it were totally enveloped inside the volume of the quieting and collecting chamber 9, whilst nevertheless remaining positioned externally and being maintained separated by the fluid from the walls that define the seat 16. Owing to this interpenetrating arrangement in the volume of the quieting and collecting chamber 9, the entire surface of the magnet 15 is exploited better to obtain greater exposure of the magnet to the circulating fluid. As already said, the inner collecting surface 11 is far from the region that is most affected by the dragging and turbulence actions induced by the fluid so as not to disturb the particles 7a, 7b deposited on the surface 11. This characteristic has the dual effect of improving the separation and accumulation of particles and of enabling the accumulated particles 7 to be evacuated even during the normal operation of said thermal plant, without thus necessarily interrupting the circulation of the fluid in the thermal plant. With particular reference to the ferrous particles 7a, what follows is pointed out. Unlike other known magnetic separators, with the separator 1 according to the invention, once the magnet 15 is removed to enable not only the non-ferrous particles 7b to be discharged but also the ferrous particles 7a to be discharged, the risk is eliminated that the latter, by being without a magnetic field, are recaptured by the main flow F of the fluid, the latter being sufficiently distant to not have any dragging effect upon the ferrous particles 7a.

The particles that are deposited on the second surface 11B, being in a deeper and more distant position from the upper zone 13 traversed by the flow F of fluid, are more sheltered from the effect of dragging. It should be noted, however, that owing to the magnet 15, also the non-ferrous particles 7b that may be deposited on the first surface 11A, whilst already being sufficiently immune to the turbulence and dragging effects inasmuch as sufficiently distant from the upper zone 13, also benefit indirectly from the magnetic action: in fact the ferrous particles 7a and the non-ferrous particles 7b that are deposited by gravity on the first inner collecting surface 11A are arranged one on top of the other: in this manner, ferrous particles 7a that rest on the non-ferrous particles 7b immobilise the latter on the surface 11A. In other words, the non-ferrous particles that are interposed between the collecting surface 11A and the ferrous particles 7a, are pressed and immobilised by the latter against the bottom wall through the force of magnetic attraction exerted by the underlying magnet 15 protecting the particles from any risk of dragging action of the fluid. In this manner the action is improved of separating and accumulating dirt of various types, not only of ferrous type, in the quieting and collecting chamber 9.

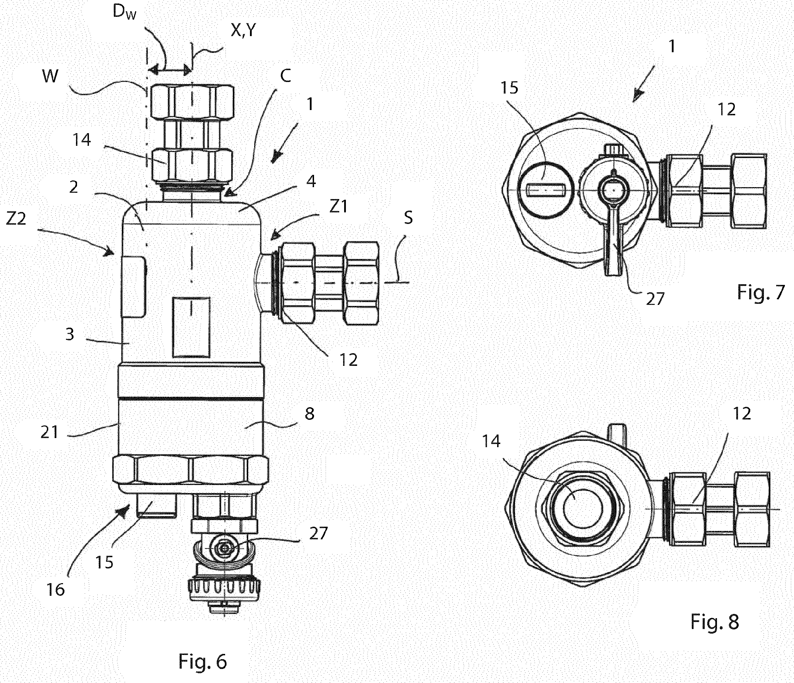

In figures 6 to 9 another embodiment of a magnetic separator 1 is shown that differs from the version that has just been disclosed by the fact that the outlet connection 14 is not decentred with respect to the longitudinal axis X but projects centrally from the outlet end wall 4 along an axis Y that coincides with the longitudinal axis X.

In order to remove periodically the dirt accumulated in the quieting and collecting chamber 9, it is sufficient to unscrew the magnet 15 from the respective seat 16, so as to stop the action of magnetic attraction on the particles, and open the discharge tap 27 or the removable cap: in this manner exit of a reduced quantity of fluid drags the accumulated ferrous particles 7a and non-ferrous 7b particles with itself to the exterior.

Advantageously, as already specified above, as the particles accumulated in the quieting and collecting chamber 9 do not run the risk of being again dragged by the circulating fluid, it is not necessary, for the periodical evacuation of the dirt, to stop the thermal plant. It is thus possible to perform at any desired moment, thus also more frequently, the operation of evacuating dirt, maintaining the thermal plant in a condition of great efficiency. It is further superfluous to provided flow closing valves upstream and downstream of the separator 1.

Owing to the magnetic separator 1 according to the invention disclosed above, the set objects are successfully achieved. In particular, a very compact magnetic separator 1 is provided that can be installed easily and is particularly suitable for being fitted upstream of domestic boilers and is at the same time provided with great versatility and operating efficacy.

In particular, the separator 1, in addition to being more compact than known systems, is more effective in separating and retaining the particles owing to the particular geometrical structural conformation, with an internal guide bulkhead 17 and internal evacuating gap 18, as disclosed above.

It is possible to configure and size the device in the desired manner according to the particular application for which it is intended and variations on and/or additions to what has been disclosed and illustrated above in the attached drawings are possible. Various elements can be replaced by further technically equivalent elements without thereby falling outside the scope of the invention.

Further, the materials used for the construction of the dirt magnetic separator 1 can be chosen according to needs provided that they are suitable for the specific use for which they are intended.

## Claims

1. Dirt magnetic separator for a thermal plant, comprising:
- a first hollow body (2) defining internally a separating chamber (5) for a fluid circulating in said thermal plant, said first hollow body (2) being bounded laterally by a side wall (3) that extends around a longitudinal axis (X) and, above, by an outlet end wall (4), transverse to said longitudinal axis (X),
- a filtering cartridge (6) housed in said separating chamber (5) and arranged for keeping and separating ferrous and non-ferrous particles (7a, 7b) from said fluid and causing the decantation thereof downwards;
- a second hollow body (8), defining internally a quieting and collecting chamber (9) bounded below by a bottom wall (10) on which an inner collecting surface (11) is obtained that is suitable for receiving and storing said ferrous and non-ferrous particles (7a, 7b) coming from said filtering cartridge (6), and a discharge opening (20) for periodical evacuation of said ferrous and non-ferrous particles (7a, 7b),
- an inlet connection (12) for the fluid extending transversely to the said longitudinal axis (X) and obtained on said side wall (3) near an upper zone (13) further from said quieting and collecting chamber (9), such that the advancement and turbulent movement of the main flow (F) of the fluid substantially affect an upper portion (5') of said separating chamber (5), far from said quieting and collecting chamber (9),
- an outlet connection (14) for the fluid obtained on said outlet end wall (4) and extending in a direction parallel to said longitudinal axis (X),
- said first (2) and second (8) hollow bodies being sealingly coupled together and being shaped in such a manner that said quieting and collecting chamber (9) is arranged below said separating chamber (5), and said inner collecting surface (11) is at a distance (Dₓ) from said inlet connection (12) that is such as not to be affected by fluid turbulence and dragging actions,
- magnet means (15) engaging removably in seat means (16) obtained in said bottom wall (10) for attracting and retaining the ferrous particles (7a) conveyed by said fluid, said magnet means (15) being arranged in a position outside and below said quieting and collecting chamber (9) to attract said ferrous particles (7a) to said inner collecting surface (11) in a zone further from said inlet connection (12) and far from turbulence and dragging actions of the flow (F) of said fluid,
- in said first hollow body (2) a guide bulkhead (17) being obtained that extends, from a zone (Z1) near said inlet connection (12), transversely to said longitudinal axis (X) to close above a part of said separating chamber (5) and bound above said filtering cartridge (6),
- said guide bulkhead (17) being spaced away from said outlet end wall (4) to define a gap (18) for evacuating the fluid to said outlet connection (14), between said guide bulkhead (17) and said side wall (3) a passage opening (19) being defined, diametrically opposite said inlet connection (12) and shaped to enable the fluid to pass from said separating chamber (5) to said evacuating gap (18).

2. Dirt magnetic separator according to claim 1, wherein said passage opening (19) is obtained in a manner that is axially offset with respect to said outlet connection (14), on a side opposite said inlet connection (12), said guide bulkhead (17) and said passage opening (19) being configured for imposing on the flow (F) of the fluid a direction reversal in the advancement from said separating chamber (5) to said outlet connection (14).

3. Dirt magnetic separator according to claim 1 or 2, wherein said outlet connection (14) extends along an outlet axis (Y) that is offset with respect to said longitudinal axis (X), said outlet connection (14) being obtained on a zone of said end wall (4) further from said passage opening (19) and nearer said inlet connection (12) to impose on said fluid a longer outlet path (U) in said gap (18) to reach said outlet connection (14).

4. Dirt magnetic separator according to claim 1 or 2, wherein said connecting opening (14) projects from a central zone (C) of said end outlet wall (4), along an axis that coincides with said longitudinal axis (X).

5. Dirt magnetic separator according to anyone of the preceding claims, wherein said inlet connection (12) and said outlet connection (14) extend along respective axes that are mutually orthogonal.

6. Dirt magnetic separator according to anyone of the preceding claims, wherein said seat means comprises a blind cavity (16) open below to be able to house in a releasable manner said magnet means (15), wherein said blind cavity (16) extends in a direction parallel to said longitudinal axis (X) to the inside of said quieting and collecting chamber (9).

7. Dirt magnetic separator according to claim 6, wherein said blind cavity (16) extends in a decentralised direction with respect to said longitudinal axis (X) in a zone placed on the same side of said passage opening (19) with respect to said longitudinal axis (X).

8. Dirt magnetic separator according to anyone of the preceding claims, wherein said inner collection surface (11) comprises a first surface (11A) transverse to said longitudinal axis (X) below which said removable magnet means (15) is positioned, and a second transverse surface (11B) placed at a distance from said separating chamber (5) that is greater with respect to said first surface (11A), on said second surface (11B) said discharge opening (20) for evacuating said particles (7a, 7b) being provided.

9. Dirt magnetic separator according to claim 8, wherein said first surface (11A) and second surface (11B) are sufficiently distant from said upper portion (5') of said separating chamber (5) as not to be affected by fluid turbulence and dragging, and in this manner enable said particles (7a, 7b) to be evacuated through said discharge opening (20) without necessarily stopping the circulation of the fluid in said thermal plant.

10. Dirt magnetic separator according to claim 8 or 9, wherein said seat means (16) is bounded above by said first transverse surface (11A) and is bounded laterally partially by a lateral bounding wall (21) of said second hollow body (8) and partially by a surface (22) that extends parallel to said longitudinal axis (X) and connects said first transverse surface (11A) to said second surface (11B).

11. Dirt magnetic separator according to anyone of the preceding claims, wherein said magnet means (15) comprises a cylindrical element (23) in which a permanent magnet (24) is contained and fixed, said cylindrical element (23) being provided with a threaded portion (25) suitable for engaging removably with a further threaded portion (26) of said seat means (16), and of a gripping portion (28) for enabling screwing into and unscrewing from said seat means (16).

12. Dirt magnetic separator according to anyone of the preceding claims, wherein said filtering cartridge (6) housed in said separating chamber (5) comprises mutually distanced and parallel elongated elements (31), provided with peripheral surfaces that are suitable for diverting the flow of fluid repeatedly to cause said ferrous and non-ferrous particles (7a, 7b) to be decanted and the latter to be deposited in said quieting and collecting chamber (9) on said inner collection surface (11).

13. Dirt magnetic separator according to anyone of the preceding claims, wherein said discharge outlet (20) is provided with a removable cap or a tap (27) that is drivable to permit periodically the evacuation of said ferrous and non-ferrous particles (7a, 7b) from said quieting and collecting chamber (9) once said magnet means (15) has been removed from said seat means (16), said tap (27) or said removable cap being openable to release said discharge opening (24) and to enable said particles (10) to be evacuated also during normal operation of said heating plant.

## Patentansprüche

1. Schmutz-Magnetabscheider für ein Wärmekraftwerk, umfassend:
- einen ersten Hohlkörper (2), der intern eine Abscheidekammer (5) für ein Fluid definiert, das im Wärmekraftwerk zirkuliert, wobei der erste Hohlkörper (2) seitlich durch eine Seitenwand (3), die sich um eine Längsachse (X) erstreckt, und oben durch eine Auslassstirnwand (4), quer zur Längsachse (X), begrenzt ist,
- eine Filterpatrone (6), die in der Abscheidekammer (5) untergebracht und angeordnet ist, eisenhältige und nicht eisenhältige Partikel (7a, 7b) aus dem Fluid zu halten und zu trennen und eine Dekantierung derselben stromabwärts zu veranlassen;
- einen zweiten Hohlkörper (8), der intern eine Beruhigungs- und Sammelkammer (9), die unten durch eine Bodenwand (10) begrenzt ist, auf der eine innere Sammelfläche (11) gebildet ist, die zum Aufnehmen und Lagern der eisenhältigen und nicht eisenhältigen Partikel (7a, 7b) geeignet ist, die von der Filterpatrone (6) kommen, und eine Abgabeöffnung (20) zum periodischen Evakuieren der eisenhältigen und nicht eisenhältigen Partikel (7a, 7b) definiert,
- eine Einlassverbindung (12) für das Fluid, die sich quer zur Längsachse (X) erstreckt und an der Seitenwand (3) nahe einer oberen Zone (13), fernab der Beruhigungs- und Sammelkammer (9) gebildet ist, sodass die Zuleitung und turbulente Bewegung des Hauptstroms (F) des Fluids im Wesentlichen einen oberen Abschnitt (5') der Abscheidekammer (5), fern der Beruhigungs- und Sammelkammer (9) beeinflussen,
- eine Auslassverbindung (14) für das Fluid, die an der Auslassstirnwand (4) gebildet ist und sich in einer Richtung parallel zur Längsachse (X) erstreckt,
- wobei der erste (2) und zweite (8) Hohlkörper dicht aneinandergekoppelt sind und so geformt sind, dass die Beruhigungs- und Sammelkammer (9) unter der Abscheidekammer (5) angeordnet ist und die innere Sammelfläche (11) mit Abstand (Dₓ) zur Einlassverbindung (12) liegt, sodass sie nicht durch Fluidturbulenz- und Mitführungsvorgänge beeinflusst ist,
- Magnetmittel (15), die lösbar im Aufnahmemittel (16) eingerastet sind, das in der Bodenwand (10) gebildet ist, um die eisenhältigen Partikel (7a) anzuziehen und zu halten, die durch das Fluid befördert werden, wobei die Magnetmittel (15) an einer Position außerhalb und unter der Beruhigungs- und Sammelkammer (9) angeordnet sind, um die eisenhältigen Partikel (7a) zur inneren Sammelfläche (11) in einer Zone, die fernab der Einlassverbindung (12) und fern von Fluidturbulenz- und Mitführungsvorgängen des Stroms (F) des Fluids liegt, anzuziehen,
- im ersten Hohlkörper (2) eine Führungsschottwand (17) gebildet ist, die sich von einer Zone (Z1) nahe der Einlassverbindung (12) quer zur Längsachse (X) erstreckt, um über einem Teil der Abscheidekammer (5) zu schließen und über der Filterpatrone (6) zu begrenzen,
- wobei die Führungsschottwand (17) von der Auslassstirnwand (4) beabstandet ist, um einen Spalt (18) zum Evakuieren des Fluids zur Auslassverbindung (14) zu definieren, wobei zwischen der Führungsschottwand (17) und der Seitenwand (3) eine Durchgangsöffnung (19) definiert ist, die der Einlassverbindung (12) diametral gegenüberliegt und so geformt ist, dass das Fluid aus der Abscheidekammer (5) zum Evakuierungsspalt (18) strömen kann.

2. Schmutz-Magnetabscheider nach Anspruch 1, wobei die Durchgangsöffnung (19) an einer Seite gegenüber der Einlassverbindung (12) in einer Weise gebildet ist, dass sie axial in Bezug auf die Auslassverbindung (14) versetzt ist, wobei die Führungsschottwand (17) und die Durchgangsöffnung (19) so gestaltet sind, dass sie dem Strom (F) des Fluids eine Richtung auferlegen, die zu jener der Zuleitung von der Abscheidekammer (5) zur Auslassverbindung (14) umgekehrt ist.

3. Schmutz-Magnetabscheider nach Anspruch 1 oder 2, wobei sich die Auslassverbindung (14) entlang einer Auslassachse (Y) erstreckt, die in Bezug auf die Längsachse (X) versetzt ist, wobei die Auslassverbindung (14) in einer Zone der Stirnwand (4) fernab von der Durchlassöffnung (19) und näher bei der Einlassverbindung (12) gebildet ist, um das Fluid einem längeren Auslasspfad (U) in dem Spalt (18) bis zum Erreichen der Auslassverbindung (14) auszusetzen.

4. Schmutz-Magnetabscheider nach Anspruch 1 oder 2, wobei die Verbindungsöffnung (14) von einer zentralen Zone (C) der Stirnauslasswand (4) entlang einer Achse vorsteht, die mit der Längsachse (X) übereinstimmt.

5. Schmutz-Magnetabscheider nach einem der vorstehenden Ansprüche, wobei sich die Einlassverbindung (12) und die Auslassverbindung (14) entlang jeweiliger Achsen erstrecken, die wechselseitig orthogonal sind.

6. Schmutz-Magnetabscheider nach einem der vorstehenden Ansprüche, wobei das Aufnahmemittel einen Blindhohlraum (16) umfasst, der unten offen ist, um das Magnetmittel (15) lösbar unterzubringen, wobei sich der Blindhohlraum (16) in einer Richtung parallel zur Längsachse (X) zur Innenseite der Beruhigungs- und Sammelkammer (9) erstreckt.

7. Schmutz-Magnetabscheider nach Anspruch 6, wobei sich der Blindhohlraum (16) in einer dezentralisierten Richtung in Bezug auf die Längsachse (X) in einer Zone erstreckt, die an derselben Seite der Durchgangsöffnung (19) in Bezug auf die Längsachse (X) platziert ist.

8. Schmutz-Magnetabscheider nach einem der vorstehenden Ansprüche, wobei die innere Sammelfläche (11) eine erste Oberfläche (11A) quer zur Längsachse (X) umfasst, unter der das entfernbare Magnetmittel (15) positioniert ist, und eine zweite Querfläche (11B), die mit Abstand zur Abscheidekammer (5) platziert ist, der in Bezug auf die erste Oberfläche (11A) größer ist, wobei auf der zweiten Oberfläche (11B) die Abgabeöffnung (20) zum Evakuieren der Partikel (7a, 7b) vorgesehen ist.

9. Schmutz-Magnetabscheider nach Anspruch 8, wobei die erste Oberfläche (11A) und zweite Oberfläche (11B) ausreichend von dem oberen Abschnitt (5') der Abscheidekammer (5) entfernt sind, um nicht durch Fluidturbulenz und Mitführung beeinflusst zu sein, und auf diese Weise eine Evakuierung der Partikel (7a, 7b) durch die Abgabeöffnung (20) ermöglichen, ohne die Zirkulation des Fluids im Wärmekraftwerkstoppen zu müssen.

10. Schmutz-Magnetabscheider nach Anspruch 8 oder 9, wobei das Aufnahmemittel (16) oben durch die erste Querfläche (11A) begrenzt ist und seitlich teilweise durch eine seitliche Begrenzungswand (21) des zweiten Hohlkörpers (8) und teilweise durch eine Oberfläche (22) begrenzt ist, die sich parallel zur Längsachse (X) erstreckt und die erste Querfläche (11A) mit der zweiten Oberfläche (11B) verbindet.

11. Schmutz-Magnetabscheider nach einem der vorstehenden Ansprüche, wobei das Magnetmittel (15) ein zylindrisches Element (23) umfasst, in dem ein Permanentmagnet (24) enthalten und befestigt ist, wobei das zylindrische Element (23) mit einem Gewindeabschnitt (25), der für ein lösbares Einrasten mit einem weiteren Gewindeabschnitt (26) des Aufnahmemittels (16) geeignet ist, und einem Griffabschnitt (28). der ein Einschrauben in das und Abschrauben aus dem Aufnahmemittel (16) ermöglicht, versehen ist.

12. Schmutz-Magnetabscheider nach einem der vorstehenden Ansprüche, wobei die Filterpatrone (6), die in der Abscheidekammer (5) untergebracht ist, wechselseitig beabstandete und parallele längliche Elemente (31) umfasst, die mit peripheren Oberflächen versehen sind, die zum wiederholten Ablenken des Fluidstroms geeignet sind, um ein Dekantieren der eisenhältigen und nicht eisenhältigen Partikel (7a, 7b) und ein Abscheiden derselben in der Beruhigungs- und Sammelkammer (9) auf der inneren Sammelfläche (11) zu veranlassen.

13. Schmutz-Magnetabscheider nach einem der vorstehenden Ansprüche, wobei der Abgabeauslass (20) mit einer entfernbaren Kappe oder einer Lasche (27) versehen ist, die antreibbar ist, um periodisch das Evakuieren der einsenhältigen und nicht eisenhältigen Partikel (7a, 7b) aus der Beruhigungs- und Sammelkammer (9) zu ermöglichen, sobald das Magnetmittel (15) aus dem Aufnahmemittel (16) entfernt ist, wobei die Lasche (27) oder die entfernbare Kappe geöffnet werden können, um die Abgabeöffnung (24) freizugeben oder ein Evakuieren der Partikel (10) auch während eines Normalbetriebs des Wärmekraftwerks zu ermöglichen.

## Revendications

1. Séparateur magnétique de saleté pour une installation thermique, comprenant :
- un premier corps creux (2) définissant en interne une chambre de séparation (5) pour un fluide circulant dans ladite installation thermique, ledit premier corps creux (2) étant délimité latéralement par une paroi latérale (3) qui s'étend autour d'un axe longitudinal (X) et, au-dessus, d'une paroi d'extrémité de sortie (4), transversalement audit axe longitudinal (X),
- une cartouche de filtration (6) logée dans ladite chambre de séparation (5) et agencée pour maintenir et séparer des particules ferreuses et non ferreuses (7a, 7b) dudit fluide et amenant la décantation de celles-ci vers le bas ;
- un second corps creux (8), définissant en interne une chambre d'insonorisation et de collecte (9) délimitée dessous par une paroi inférieure (10) sur laquelle une surface de collecte intérieure (11) est obtenue, laquelle est adaptée pour la réception et le stockage desdites particules ferreuses et non ferreuses (7a, 7b) venant de ladite cartouche de filtration (6), et une ouverture de décharge (20) pour l'évacuation périodique desdites particules ferreuses et non ferreuses (7a, 7b),
- une connexion d'entrée (12) pour le fluide s'étendant transversalement audit axe longitudinal (X) et obtenue sur ladite paroi latérale (3) près d'une zone supérieure (13) plus loin de ladite chambre d'insonorisation et de collecte (9) de sorte que l'avancement et le mouvement turbulent du flux principal (F) du fluide affectent sensiblement une portion supérieure (5') de ladite chambre de séparation (5), loin de ladite chambre d'insonorisation et de collecte (9),
- une connexion de sortie (14) pour le fluide obtenue sur ladite paroi d'extrémité de sortie (4) et s'étendant dans une direction parallèle audit axe longitudinal (X),
- lesdits premier (2) et second (8) corps creux étant couplés de manière étanche ensemble et étant formés de manière que ladite chambre d'insonorisation et de collecte (9) soit agencée sous ladite chambre de séparation (5), et ladite surface de collecte intérieure (11) est à une distance (Dₓ) de ladite connexion d'entrée (12) qui est telle qu'elle ne soit pas affectée par des actions de turbulence et de dragage du fluide,
- un moyen magnétique (15) venant en prise de manière amovible dans un moyen de siège (16) obtenu dans ladite paroi inférieure (10) pour attirer et retenir les particules ferreuses (7a) transportées par ledit fluide, ledit moyen magnétique (15) étant agencé dans une position en dehors et sous ladite chambre d'insonorisation et de collecte (9) pour attirer lesdites particules ferreuses (7a) à ladite surface de collecte intérieure (11) dans une zone plus loin de ladite connexion d'entrée (12) et loin des actions de turbulence et de dragage du flux (F) dudit fluide,
- dans ledit premier corps creux (2) une cloison de guidage (17) étant obtenue, laquelle s'étend, depuis une zone (Z1) près de ladite connexion d'entrée (12), transversalement audit axe longitudinal (X) pour fermer au-dessus d'une partie de ladite chambre de séparation (5) et délimitée au-dessus de ladite cartouche de filtration (6),
- ladite cloison de guidage (17) étant espacée de ladite paroi d'extrémité de sortie (4) pour définir une fente (18) pour l'évacuation du fluide à ladite connexion de sortie (14), entre ladite cloison de guidage (17) et ladite paroi latérale (3) une ouverture de passage (19) étant définie, diamétralement opposée à ladite connexion d'entrée (12) et formée pour permettre au fluide de passer de ladite chambre de séparation (5) à ladite fente d'évacuation (18).

2. Séparateur magnétique de saleté selon la revendication 1, dans lequel ladite ouverture de passage (19) est obtenue d'une manière qui est axialement décalée par rapport à ladite connexion de sortie (14), sur un côté opposé à ladite connexion d'entrée (12), ladite cloison de guidage (17) et ladite ouverture de passage (19) étant configurées pour s'imposer sur le flux (F) du fluide dans une direction inverse dans l'avancement de ladite chambre de séparation (5) à ladite connexion de sortie (14).

3. Séparateur magnétique de saleté selon la revendication 1 ou 2, dans lequel ladite connexion de sortie (14) s'étend le long d'un axe de sortie (Y) qui est décalé par rapport audit axe longitudinal (X), ladite connexion de sortie (14) étant obtenue sur une zone de ladite paroi d'extrémité (4) plus loin de ladite ouverture de passage (19) et plus près de ladite connexion d'entrée (12) pour imposer sur ledit fluide une voie de sortie plus longue (U) dans ladite fente (18) pour atteindre ladite connexion de sortie (14).

4. Séparateur magnétique de saleté selon la revendication 1 ou 2, dans lequel ladite ouverture de connexion (14) fait saillie d'une zone centrale (C) de ladite paroi de sortie d'extrémité (4), le long d'un axe qui coïncide avec ledit axe longitudinal (X).

5. Séparateur magnétique de saleté selon l'une quelconque des revendications précédentes, dans lequel ladite connexion d'entrée (12) et ladite connexion de sortie (14) s'étendent le long d'axes respectifs qui sont mutuellement orthogonaux.

6. Séparateur magnétique de saleté selon l'une quelconque des revendications précédentes, dans lequel ledit moyen de siège comprend une cavité borgne (16) ouverte dessous pour être apte à loger de manière libérable ledit moyen magnétique (15), dans lequel ladite cavité borgne (16) s'étend dans une direction parallèle audit axe longitudinal (X) à l'intérieur de ladite chambre d'insonorisation et de collecte (9).

7. Séparateur magnétique de saleté selon la revendication 6, dans lequel ladite cavité borgne (16) s'étend dans une direction décentralisée par rapport audit axe longitudinal (X) dans une zone placée sur le même côté de ladite ouverture de passage (19) par rapport audit axe longitudinal (X).

8. Séparateur magnétique de saleté selon l'une quelconque des revendications précédentes, dans lequel ladite surface de collecte intérieure (11) comprend une première surface (11A) transversale audit axe longitudinal (X) sous lequel ledit moyen magnétique amovible (15) est positionné, et une seconde surface transversale (11B) placée à une distance de ladite chambre de séparation (5) qui est plus grande par rapport à ladite première surface (11A), ladite ouverture de décharge (20) pour l'évacuation desdites particules (7a, 7b) étant prévue sur ladite seconde surface (11B).

9. Séparateur magnétique de saleté selon la revendication 8, dans lequel lesdites première surface (11A) et seconde surface (11B) sont suffisamment distantes de ladite portion supérieure (5') de ladite chambre de séparation (5) pour ne pas être affectées par la turbulence et le dragage de fluide, et de cette manière permettre auxdites particules (7a, 7b) d'être évacuées au travers de ladite ouverture de décharge (20) sans nécessairement arrêter la circulation du fluide dans ladite installation thermique.

10. Séparateur magnétique de saleté selon la revendication 8 ou 9, dans lequel ledit moyen de siège (16) est délimité au-dessus par ladite première surface transversale (11A) et est délimité latéralement partiellement par une paroi de délimitation latérale (21) dudit second corps creux (8) et partiellement par une surface (22) qui s'étend parallèlement audit axe longitudinal (X) et raccorde ladite première surface transversale (11A) à ladite seconde surface (11B).

11. Séparateur magnétique de saleté selon l'une quelconque des revendications précédentes, dans lequel ledit moyen magnétique (15) comprend un élément cylindrique (23) dans lequel un aimant permanent (24) est contenu et fixé, ledit élément cylindrique (23) étant doté d'une portion filetée (25) adaptée pour venir en prise de manière amovible avec une autre portion filetée (26) dudit moyen de siège (16), et d'une portion de préhension (28) pour permettre le vissage dans et le dévissage dudit moyen de siège (16).

12. Séparateur magnétique de saleté selon l'une quelconque des revendications précédentes, dans lequel ladite cartouche de filtration (6) logée dans ladite chambre de séparation (5) comprend des éléments allongés parallèlement et mutuellement espacés (31), dotés de surfaces périphériques qui sont adaptées pour détourner le flux de fluide de manière répétée pour amener lesdites particules ferreuses et non ferreuses (7a, 7b) à être décantées et ces dernières à être déposées dans ladite chambre d'insonorisation et de collecte (9) sur ladite surface de collecte intérieure (11).

13. Séparateur magnétique de saleté selon l'une quelconque des revendications précédentes, dans lequel ladite sortie de décharge (20) est dotée d'un capuchon amovible ou d'un robinet (27) qui est entraînable pour permettre périodiquement l'évacuation desdites particules ferreuses et non ferreuses (7a, 7b) de ladite chambre d'insonorisation et de collecte (9) une fois que ledit moyen magnétique (15) a été retiré dudit moyen de siège (16), ledit robinet (27) ou ledit capuchon amovible étant ouvrable pour libérer ladite ouverture de décharge (24) et pour permettre auxdites particules (10) d'être évacuées aussi pendant le fonctionnement normal de ladite installation de chauffage.
